# EUROPÄISCHE PATENTSCHRIFT

(11) **EP 3 590 775 B1**
(45) Veröffentlichungstag und Bekanntmachung des Hinweises auf die Patenterteilung: **26.01.2022**
(21) Anmeldenummer: 19184278.0
(22) Anmeldetag: 03.07.2019
(51) Int. Cl.: B60R 22/46

(54) **GURTAUFROLLER FÜR EINE SICHERHEITSGURTEINRICHTUNG EINES KRAFTFAHRZEUGES**
BELT RETRACTOR FOR A SAFETY BELT DEVICE OF A MOTOR VEHICLE
ENROULEUR DE CEINTURE POUR UN DISPOSITIF DE CEINTURE DE SÉCURITÉ D'UN VÉHICULE AUTOMOBILE

(30) Priorität: 06.07.2018 DE 102018211226
(43) Veröffentlichungstag der Anmeldung: 08.01.2020
(73) Patentinhaber: Autoliv Development AB, 447 83 Vårgårda (SE)
(72) Erfinder: MATZEN, Frank, 22459 Hamburg (DE); WITTENBERG, Geert, 22828 Norderstedt (DE); BEGOVIC, Giuliano, 25337 Elmshorn (DE); WINHEIM, David, 20251 Hamburg (DE); KRAMBEER, Sven, 25469 Halstenbek (DE)
(74) Vertreter: Müller Verweyen

(56) Entgegenhaltungen:
- WO-A1-2005/021339
- DE-B3-102006 002 540
- DE-B3-102013 220 956
- DE-C1- 10 059 227

## Beschreibung

Die vorliegende Erfindung betrifft einen Gurtaufroller für eine Sicherheitsgurteinrichtung eines Kraftfahrzeuges mit den Merkmalen des Oberbegriffs von Anspruch 1.

Gurtaufroller werden in Sicherheitsgurteinrichtungen von Kraftfahrzeugen verwendet und dienen dazu, ein Ende eines zur Rückhaltung eines Insassen vorgesehenen Sicherheitsgurtes aufzuwickeln. Der Gurtaufroller ist entweder an der Fahrzeugstruktur oder an einem an der Fahrzeugstruktur befestigten Fahrzeugsitz bzw. an einer daran befestigten Sitzbank befestigt. Der Gurtaufroller weist in seinem Grundaufbau einen zur Befestigung vorgesehenen Rahmen und eine in dem Rahmen drehbar gelagerte Gurtspule auf, wobei der Sicherheitsgurt auf der Gurtspule aufwickelbar ist. Die Gurtspule ist über eine Triebfeder in Aufwickelrichtung federbelastet und über eine Blockiereinrichtung bei einem Überschreiten einer vorbestimmten Gurtbandauszugsbeschleunigung oder Fahrzeugverzögerung mittels einer Blockiereinrichtung gegen einen weiteren Auszug des Sicherheitsgurtes blockierbar, so dass der Insasse nachfolgend zur Vermeidung schwererer Verletzungen vor einem Aufprall auf die innere Fahrzeugstruktur zurückgehalten wird.

Um die Insassenbelastung bei der Rückhaltung zu reduzieren, haben sich Kraftbegrenzungseinrichtungen als vorteilhaft herausgestellt, welche bei blockierter Gurtspule und Überschreiten einer vorbestimmten Gurtbandauszugskraft eine kraftbegrenzte Drehung der Gurtspule in Auszugsrichtung und damit eine kraftbegrenzte Vorwärtsverlagerung des Insassen ermöglichen. Da die dadurch ermöglichte Reduzierung der Insassenbelastung unmittelbar mit dem zur Verfügung stehenden Vorverlagerungsweg zusammenhängt, hat es sich ferner als vorteilhaft herausgestellt, die in dem Sicherheitsgurt vorhandene Gurtlose vor der Aktivierung der Kraftbegrenzungseinrichtung durch einen Gurtstraffer herauszuziehen, um den zur Verfügung stehenden Vorverlagerungsweg zu vergrößern, und um den Insassen möglichst frühzeitig an die Fahrzeugverzögerung anzukoppeln.

Bei Gurtstraffern wird zwischen reversiblen Gurtstraffern und irreversiblen Gurtstraffern oder auch Leistungsstraffern unterschieden. Reversible Gurtstraffer haben eine geringere Straffleistung von ca. 100 bis 400 N und dienen dazu, die Gurtlose in einer Gefahrensituation zur Vorbereitung auf einen möglichen nachfolgenden Unfall herauszuziehen. Tritt nachfolgend kein Unfall ein, so wird der Sicherheitsgurt wieder gelockert. Zum Antrieb der reversiblen Gurtstraffer haben sich Elektromotoren bewährt, welche besonders gut und reversibel zu steuern sind. Irreversible Gurtstraffer weisen eine höhere Straffleistung von 400 bis 1000 N auf und werden erst dann aktiviert, wenn der Unfall nicht mehr zu vermeiden ist, also in einer Frühphase des Unfalles. Die irreversiblen Gurtstraffer werden also zeitlich immer nach den reversiblen Gurtstraffern aktiviert. Als Antriebe für die irreversiblen Gurtstraffer haben sich pyrotechnische Antriebe bewährt, welche nach ihrer einmaligen Aktivierung nicht mehr aktiviert werden können, so dass in diesem Fall die gesamte Sicherheitsgurteinrichtung mit dem irreversiblen Gurtstraffer ausgetauscht werden muss.

Gurtstraffer können dabei an unterschiedlichen Stellen des Sicherheitsgurtes angreifen, so z.B. an dem Gurtschloss, dem Endbeschlag oder auch an dem Gurtaufroller. Bei der Anwendung des Gurtstraffers am Gurtaufroller treibt dieser die Gurtspule bei einer Aktivierung schlagartig in Aufwickelrichtung an und zieht dadurch die in dem Sicherheitsgurt vorhandene Gurtlose aus dem Sicherheitsgurt. Im Sinne der vorliegenden Erfindung sollen unter dem Begriff Gurtstraffer nur solche verstanden werden, welche an einem Gurtaufroller angeordnet sind und die Gurtspule antreiben. Da die Gurtspule sich grundsätzlich im Normalgebrauch zum Anschnallen und zum Abschnallen frei drehen können muss, werden die Antriebe sowohl des reversiblen Gurtstraffers als auch des irreversiblen Gurtstraffers erst bei einer Aktivierung über Kupplungen mit der Gurtspule verbunden. Die Kupplungen sollten dabei so beschaffen sein, dass sie in keinem Fall unbeabsichtigt eine Drehverbindung herstellen, wodurch der Normalgebrauch des Gurtaufrollers aufgrund einer dadurch verursachten Störung der Drehbewegung der Gurtspule behindert werden würde.

Da der reversible Gurtstraffer für den Fall, dass nachfolgend kein Unfall eintritt, wieder deaktiviert und der Gurtaufroller wieder normal verwendet werden soll, muss die Kupplung des reversiblen Gurtstraffers überdies ebenfalls reversibel ausgebildet sein. Ferner muss die Kupplung des reversiblen Gurtstraffers auch dann bewusst außer Eingriff gebracht werden, wenn nachfolgend ein Unfall auftritt und der irreversible Gurtstraffer aktiviert wird, damit die Antriebsbewegung des irreversiblen Gurtstraffers nicht durch die noch im Eingriff befindliche Kupplung des reversiblen Gurtstraffers gestört wird.

Ferner müssen die Kupplungen der verschiedenen Gurtstraffer so ausgebildet sein, dass sie die Drehverbindung zwischen dem Antrieb und der Gurtspule bei einer Aktivierung des Antriebes selbsttätig herstellen, was z.B. durch Reibung, durch Trägheitskräfte oder auch durch eine Steuerkontur bewirkt werden kann. Die Bewegung der Kupplung wird dadurch durch die beginnende Bewegung des Antriebes zwangsgesteuert.

Damit wird an die Kupplungen einerseits die Anforderung gestellt, dass sie die Kupplungsbewegung bei einer Aktivierung der Antriebseinrichtung selbsttätig ausführen sollen, unter anderen Umständen die Kupplungsbewegung aber bewusst nicht ausführen sollen, um eine ungewollte Kupplungsverbindung zu vermeiden.

Aus der Druckschrift EP 1 663 737 B1 ist zum Beispiel ein Gurtaufroller mit einem reversiblen Gurtstraffer der Anmelderin bekannt, welcher eine reibungsgesteuerte Kupplung mit zwei Kupplungsklinken und einem Reibring aufweist. Der Reibring weist zwei Steuerarme auf, und ist mit den Kupplungsklinken dadurch gekoppelt, indem die Kupplungsklinken in einem ersten Ausführungsbeispiel mit Steuerstiften in jeweils ein Langloch eines Steuerarmes eingreifen, oder indem die Kupplungsklinken in einem zweiten Ausführungsbeispiel trichterförmige Ausnehmungen aufweisen, in welche die Steuerstifte eingreifen. Die Kupplungsklinken sind jeweils in länglichen Ausnehmungen eines von einem Elektromotor antreibbaren Antriebsrad längsverschieblich geführt. Der Reibring selbst ist in das Antriebrad eingeclipst und liegt über Reibfüße an einem feststehenden Dom einer Strafferabdeckung an. Ferner ragt die Gurtspule mit einem ringförmigen innenverzahnten Fortsatz in eine ringförmige, die Kupplungsklinken des Antriebsrades radial außen umfassende Ausnehmung hinein.

Das Prinzip der Auslösung der Kupplungsbewegung der Kupplung ist in dem deutschen Patent DE 100 59 227 C1 der Anmelderin beschrieben und ist auch in der Kupplung der EP 1 663 737 B1 verwirklicht, so dass diesbezüglich auf diese Druckschriften verwiesen wird.

In dem in der EP 1 663 737 B1 beschriebenen Ausführungsbeispiel wird zunächst das Antriebsrad über den Elektromotor und ein Getriebe in Drehung versetzt. Dabei wird der Reibring aufgrund der über die Reibfüße aufgebrachten Reibkräfte bewusst gegenüber dem Antriebsrad zurückgehalten, wodurch die in den Ausnehmungen des Antriebrades verschieblich gelagerten Kupplungsklinken zu einer Ausfahrbewegung gezwungen werden und zum Eingriff in die Innenverzahnung des Fortsatzes der Gurtspule gelangen.

Aus der DE 10 2013 220956 B3 ist ein Gurtaufroller gemäß dem Oberbegriff von Anspruch 1 bekannt.

Es hat sich herausgestellt, dass die Kupplungsklinken trotz der Kopplung mit dem Reibring über die Steuerarme unter extremen Erschütterungen, wie z.B. bei einer nachfolgenden Aktivierung eines irreversiblen Gurtstraffers unbeabsichtigt in Eingriff mit der Innenverzahnung des Fortsatzes der Gurtspule gelangen können.

Der Erfindung liegt daher die Aufgabe zu Grunde, einen Gurtaufroller der gattungsgemäßen Art bereitzustellen, bei der die Wahrscheinlichkeit eines ungewollten Einkuppelns der Strafferkupplung reduziert bzw. die Steuerung der Ein- und Auskupplungsbewegung der Strafferkupplung verbessert ist.

Zur Lösung der Aufgabe wird ein Gurtaufroller mit den Merkmalen von Anspruch 1 vorgeschlagen. Weitere bevorzugte Ausführungsformen der Erfindung sind den Unteransprüchen, den Figuren und der zugehörigen Beschreibung zu entnehmen.

Gemäß dem Grundgedanken der Erfindung wird vorgeschlagen, dass der Reibring und/oder die Kupplungsklinke eine Blockierkontur aufweist, welche derart positioniert ist, und dass die Kupplungsklinke nach der außer Eingriff Bewegung aus der Verzahnung daran zur Anlage gelangt und in Richtung einer wiederholten in Eingriff Bewegung in die Verzahnung blockiert ist.

Der Vorteil der erfindungsgemäßen Lösung ist darin zu sehen, dass die Kupplungsklinke durch die Blockierkontur in einer Parkstellung gegen einen ungewollten Eingriff in die Verzahnung aufgrund z.B. starker Erschütterungen blockiert ist. Die Kupplungsklinke wird dadurch nicht nur in der Bewegung über den Steuerarm des Reibringes gesteuert, sondern überdies in einer definierten Stellung nach und vor der Aktivierung noch eine formschlüssige Anlage an der Blockierkontur blockiert. Da dieser Effekt allein durch eine Formgestaltung des Reibringes und/oder der Kupplungsklinke erreicht wird, kann die Funktion ohne zusätzliche Teile und nahezu kostenneutral bei der Herstellung der beiden Teile verwirklicht werden. Die Blockierkontur wird dabei bewusst so angeordnet, dass die Kupplungsklinke ausschließlich in einer definierten Stellung, welche hier als Parkstellung bezeichnet wird, blockiert ist, und dass sie ansonsten die Ein- und Ausfahrbewegung ungestört ausführen kann. Dabei wird die Parkstellung der Kupplungsklinke durch die Anordnung der Blockierkontur und die ausgeführte Relativbewegung der Kupplungsklinke zu dem Reibring bzw. umgekehrt definiert, wobei die Relativbewegung wiederum von den zwischen dem Reibring und dem Antriebsrad bzw. von den zwischen dem Reibring und einer feststehenden Gegenfläche des Gehäuses oder eines an diesem gehaltenen Teiles wirkenden Reibkräften abhängt. Ferner kann dabei auch die Bewegung der Kupplungsklinke zu dem Antriebsrad und umgekehrt genutzt werden. Das heißt die Kupplungsklinke gelangt erst durch den Bewegungsablauf der genannten Teile in die blockierte Stellung, wobei bei dem Bewegungsablauf, die Relativbewegung des Reibringes, der Kupplungsklinke und des Antriebsrades in beliebiger Kombination zum Blockieren der Kupplungsklinken in der Parkstellung bzw. zum Erreichen der Parkstellung genutzt werden kann.

Weiter wird vorgeschlagen, dass die über den Steuerarm zwischen dem Reibring und der Kupplungsklinke verwirklichte Kopplung spielbehaftet ist, und die spielbehaftete Kopplung bei einer Aktivierung des Gurtstraffers eine die Kupplungsklinke deblockierende Relativbewegung des Reibringes und/oder der Kupplungsklinke ermöglicht. Der Vorteil der vorgeschlagenen Weiterentwicklung ist darin zu sehen, dass die Freigabe der Blockierung der Kupplungsklinke eine geringe Relativbewegung des Reibringes und/oder der Kupplungsklinke voraussetzt, der Gurtstraffer muss also bewusst aktiviert werden, um die Blockierung der Kupplungsklinke zu lösen. Ferner wird die Aktivierung des Gurtstraffers dadurch nicht blockiert, indem die Blockierung in einem ersten Schritt durch die Relativbewegung zuerst gelöst wird, und die Kupplungsklinke erst dann anschließend in die Eingriffsstellung in die Verzahnung zur Kupplung des Antriebsrades mit der Gurtspule geschoben wird.

Weiter können der Reibring und/oder die Kupplungsklinke eine Steuerkontur aufweisen, welche die Kupplungsklinke während der Relativbewegung zu dem Reibring in die blockierte Stellung drängt. Die Bewegung der Kupplungsklinke erfolgt damit gesteuert, und die blockierte Stellung bzw. Parkstellung der Kupplungsklinke kann dadurch z.B. auch seitlich versetzt zu dem Verschiebeweg der Kupplungsklinke angeordnet sein.

Dabei kann die Steuerkontur zum Beispiel durch eine Rampe gebildet sein. Die Rampe zwingt der Kupplungsklinke ausgehend von dem linearen Verschiebeweg eine kontinuierliche Schwenk- oder Versatzbewegung auf, wobei die Bewegung der Kupplungsklinke insbesondere nicht durch Stufen oder Kanten an der Steuerkontur haken kann. Die gesteuerte Bewegung der Kupplungsklinke in die blockierte Stellung ist damit eine kontinuierliche Bewegung. Sofern die Rampe an dem Reibring vorgesehen ist, ist sie so ausgerichtet, dass sie entgegen der Bewegungsrichtung des Reibringes während der Relativbewegung der Kupplungsklinke in die blockierte Stellung ansteigt. Sofern die Rampe an der Kupplungsklinke angeordnet ist, ist sie hingegen so ausgerichtet, dass sie entgegen der Bewegungsrichtung der Kupplungsklinke während der Relativbewegung in die blockierte Stellung der Kupplungsklinke ansteigt. Weiter wird vorgeschlagen, dass der Reibring durch ein mehrfach umgeformtes Stanzteil aus einem Metallblech gebildet ist. Der Vorteil dieser Lösung ist darin zu sehen, dass die Blockierkontur beim Stanzen und Umformen des Reibringes mit sehr geringen, nur durch die zusätzlichen Umformschritte bedingten Mehrkosten hergestellt werden kann.

Ferner kann der Reibring auch durch ein Kunststoffspritzteil gebildet sein, wobei die Blockierkontur gleich bei dem Spritzen des Reibringes ohne Mehrkosten mitgeformt werden kann.

Ferner kann die Kupplungsklinke bevorzugt durch ein Metallsinterteil gebildet sein, so dass auch eine sehr komplexe Formgebung mit z.B. einer Blockierkontur oder verschiedenen Steuerkonturen ohne eine zusätzliche Nachbearbeitung und insbesondere ohne eine spanende Nachbearbeitung hergestellt werden kann.

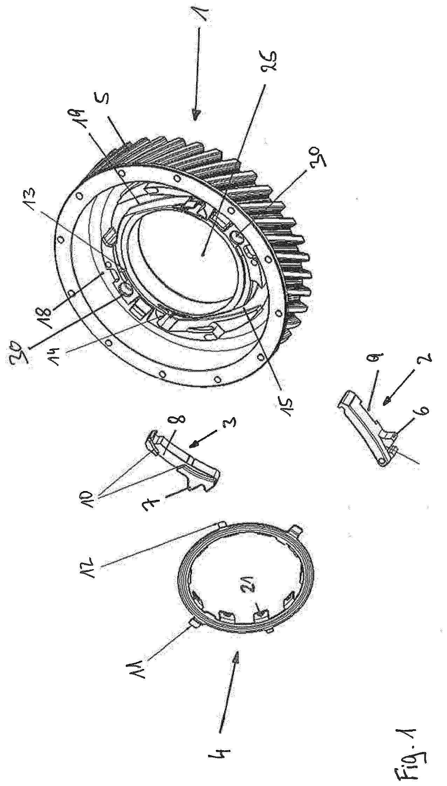

Die Erfindung wird im Folgenden anhand verschiedener bevorzugter Ausführungsformen unter Bezugnahme auf die beigefügten Figuren erläutert. Dabei zeigt
- Fig. 1: ein Antriebsrad mit einem Reibring und Kupplungsklinken als Einzelteile; und
- Fig. 2: ein Ausschnitt des Antriebsrades mit einer blockierten Kupplungsklinke; und
- Fig. 3: den Ausschnitt des Antriebsrades mit der Kupplungsklinke in verschiedenen Stellungen während der Ein- und Ausfahrbewegung; und
- Fig. 4: das Antriebsrad mit der in einer blockierten Stellung angeordneten Kupplungsklinke in verschiedenen Stellungen unter Einwirkung von äußeren Kräften;

In den Figuren sind nur die Einzelteile der Strafferkupplung dargestellt. Der Gurtaufroller als solches ist nicht dargestellt, weist aber selbstverständlich die üblichen Bauteile auf und entspricht in dem Grundaufbau den in den Druckschriften DE 100 59 227 C1 und EP 1 663 737 B1 beschriebenen Sicherheitsgurtaufrollern.

Der Gurtaufroller weist in seinem Grundaufbau eine Gurtspule auf, welche drehbar in einem fahrzeugfest befestigbaren Rahmen gelagert ist und der Aufwicklung eines Sicherheitsgurtes der Sicherheitsgurteinrichtung dient. An dem Rahmen ist eine Antriebseinrichtung z.B. in Form eines Elektromotors gehalten, welche über die nachfolgend noch beschriebene Strafferkupplung mit der Gurtspule in Antriebsverbindung gebracht werden kann. Ferner kann der Gurtaufroller zusätzlich eine Kraftbegrenzungseinrichtung, einen irreversiblen Gurtstraffer und diverse Zusatzfunktionen aufweisen.

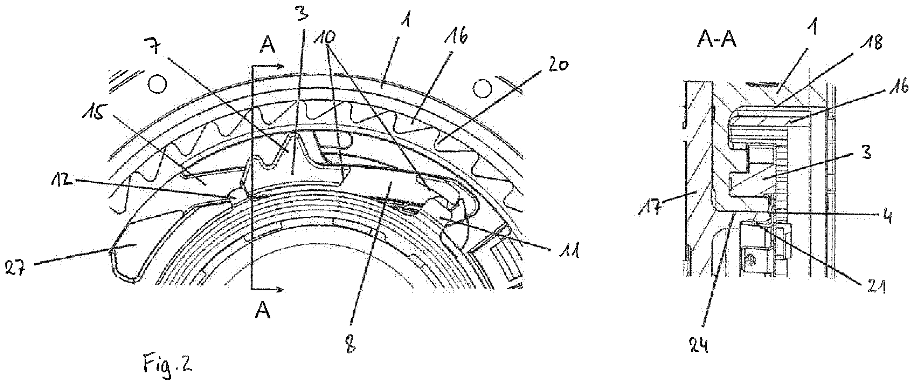

Die nicht dargestellte Gurtspule weist einen drehfest verbundenen oder auch einstückig angeformten, haubenförmigen Fortsatz 16 mit einer radial inneren Verzahnung 20 auf, welcher z.B. in der Figur 2 zu erkennen ist.

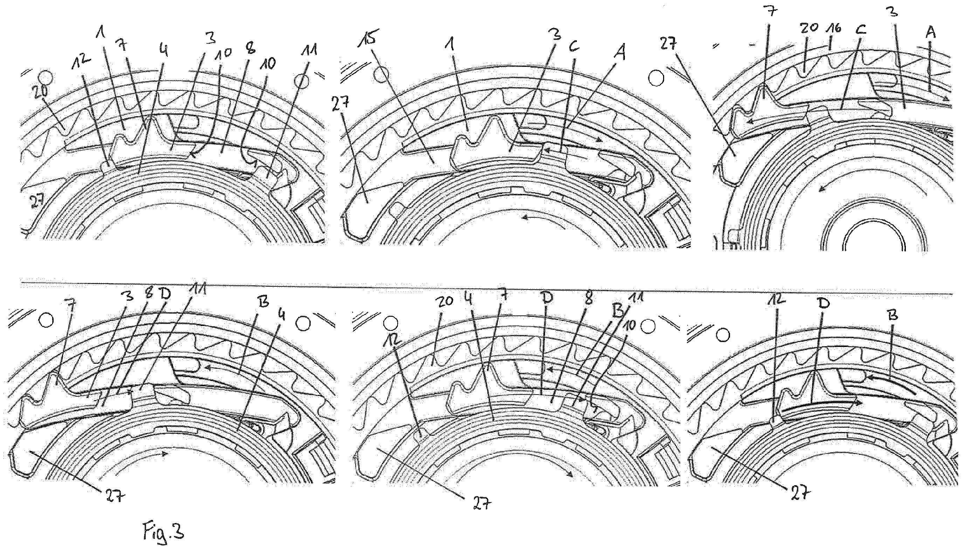

Die Strafferkupplung umfasst als Grundbestandteile ein außenverzahntes Antriebsrad 1, zwei Kupplungsklinken 2 und 3, einen Reibring 4 und eine in der Figur 2 zu erkennende Strafferabdeckung 17. Die Antriebseinrichtung treibt das außenverzahnte Antriebsrad 1 bei einer Aktivierung über ein Getriebe zur Straffung des Sicherheitsgurtes in Aufwickelrichtung A an und kann in der Darstellung hinzugedacht werden (siehe Figur 3).

Das außenverzahnte Antriebsrad 1 weist eine zentrische Öffnung 25, eine ringförmige Ausnehmung 18 und zwei innerhalb der ringförmigen Ausnehmung 18 vorgesehene, kanalförmige Ausnehmungen 15 und 19 mit jeweils zwei wenigstens abschnittsweise linearen Führungsflächen auf. In den kanalförmigen Ausnehmungen 15 und 19 sind zwei Kupplungsklinken 2 und 3 linear verschieblich geführt, welche jeweils an ihren in der Einbaustellung radial außen liegenden Seiten Zähne 6 und 7 zum Eingriff in die Verzahnung 20 des Fortsatzes 16 der Gurtspule aufweisen. Ferner weisen die Kupplungsklinken 2 und 3 an den der Gurtspule bzw. dem Fortsatz 16 zugewandten Seitenflächen jeweils eine trichterförmige Ausnehmung 8, 9 mit zwei gegenüberliegenden, in der Einbaustellung zu der Radialaußenseite hin aufeinander zu laufenden Seitenwänden 10 auf.

Der Reibring 4 weist zwei gegenüberliegend, in einem Winkel von 180 Grad zueinander angeordnete Steuerarme 11 und zwei ebenfalls gegenüberliegend in einem Winkel von 180 Grad zueinander angeordnete Blockierkonturen 12 in Form von radial nach außen vorstehenden Fingern auf. Ferner weist der Reibring 4 an der Radialinnenseite eine Mehrzahl von beabstandeten, auf einem Durchmesser angeordneten, axial gerichteten Reibfüßen 21 auf.

Die Strafferkupplung wird montiert, indem zuerst eine Strafferabdeckung 17 von der Rückseite auf das Antriebsrad 1 aufgesetzt und dabei mit einem ringförmigen Fortsatz 24 in die zentrische Öffnung 25 des Antriebsrades 1 und mit den in der Figur 13 zu erkennenden Fixierzapfen 29 in jeweils eine Öffnung 30 eingeführt wird. Anschließend werden die Kupplungsklinken 2 und 3 in die Ausnehmungen 15 und 19 eingelegt, und der Reibring 4 so aufgesetzt, dass er mit den Reibfüßen 21 an der Innenseite des ringförmigen Fortsatzes 24 anliegt.

Der Reibring 4 ist in der montierten Anfangsstellung so montiert, dass die Kupplungsklinken 2 und 3 in einer eingefahrenen Stellung angeordnet sind und mit den Zähnen 6 und 7 nicht in die Verzahnung 20 eingreifen, wie dies in der Figur 2 zu erkennen ist. Die Kupplungsklinken 2 und 3 liegen ferner mit ihren Stirnflächen an den Fingern des Reibringes 4 an, so dass sie gegen eine unbeabsichtigte Ausfahrbewegung blockiert sind. Die Strafferkupplung ist damit offen und die Gurtspule des Gurtaufrollers kann sich frei drehen. Die Steuerarme 11 befinden sich am Eintritt der trichterförmigen Ausnehmungen 8 und 9, radial unter den an der Rückseite der Kupplungsklinken 2 und 3 angeordneten Seitenwänden 10 der trichterförmigen Ausnehmungen 8 und 9.

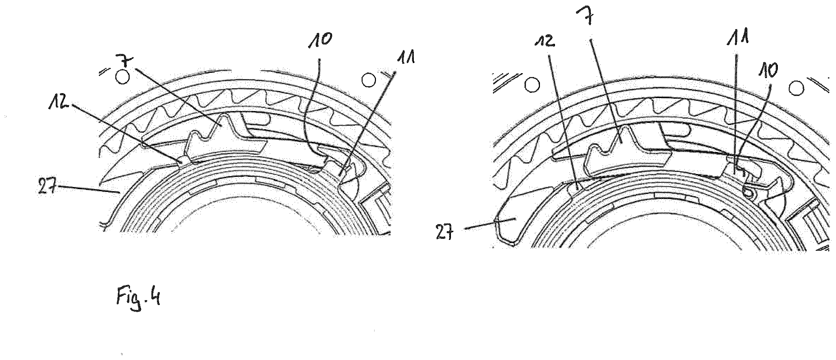

In dieser blockierten Stellung der Kupplungsklinken 2 und 3 können diese durch die stirnseitige Anlage an der durch die Finger des Reibringes 4 gebildeten Blockierkontur 12 und durch die Begrenzung der Auslenkung der Kupplungsklinken 2 und 3 durch die an den Seitenwänden 10 zur Anlage gelangenden Steuerarme 11 des Reibringes 4, weder durch eine Längsverschiebung in der Darstellung nach links noch durch ungerichtete Erschütterungen mit den Zähnen 7 und 6 in die Verzahnung 20 des Fortsatzes 16 in Eingriff gelangen, wie in der rechten Darstellung der Figur 4 zu erkennen ist. Die Bewegung der Kupplungsklinken 2 und 3 wird damit praktisch an zwei Seiten nämlich an der Stirnseite durch die Blockierkontur 12 und an der Rückseite durch die Seitenwand 10 begrenzt, und es wird verhindert, dass die Kupplungsklinken 2 und 3 ungewollt in Eingriff mit der Verzahnung 20 gelangen. Sofern die Strafferkupplung zur Verbindung eines reversiblen Gurtstraffers mit der Gurtspule verwendet wird, kann durch die erfindungsgemäße Lösung insbesondere verhindert werden, dass die Kupplungsklinken 2 und 3 bei einer nachfolgenden Aktivierung eines irreversiblen Gurtstraffers in Eingriff mit der Verzahnung 20 gelangen und dadurch die irreversible Straffbewegung des Sicherheitsgurtes stören.

In der Figur 3 ist in den oberen Darstellungen ausgehend von links nach rechts die Strafferkupplung in verschiedenen Stellungen des Reibringes 4 und der Kupplungsklinke 3 in einer

Anfangsphase der Aktivierung des Gurtstrafferantriebes bis zu dem vollständigen Eingriff der Kupplungsklinke 3 in die Verzahnung 20 zu erkennen. In den unteren Darstellungen von links nach rechts ist dieselbe Kupplungsklinke 3 in verschiedenen Stellungen aus der Eingriffsstellung bis hin zu einer Parkstellung in einer Endphase der Aktivierung des Gurtstrafferantriebes zu erkennen.

Zu Beginn der Aktivierung des Gurtstraffers befindet sich die Kupplungsklinke 3 in einer Parkstellung, in welcher sie sich in einer eingeschobenen Stellung befindet und mit ihren Zähnen 7 nicht in die Verzahnung 20 eingreift. Diese Stellung in der linken oberen Darstellung der Figur 3 entspricht der in der Figur 2 gezeigten Stellung, und es wird auf die zu der Figur 2 zugehörige Beschreibung verwiesen.

Wird der Gurtstraffer aktiviert, so wird das Antriebsrad 1 in Pfeilrichtung A angetrieben. Der Reibring 4 ist über den Steuerarm 11 bewusst mit einem Spiel in der Ausnehmung 8 mit der Kupplungsklinke 3 gekoppelt. Dadurch führt der Reibring 4 während der Anfangsphase der Antriebsbewegung des Antriebsrades 1 eine Relativbewegung in der Ausnehmung 8 zu dem Antriebsrad 1 in Pfeilrichtung C aus, während der er die Kupplungsklinke 3 nicht bewegt, bis er seitlich mit dem Steuerarm 11 an der den Zähnen 7 zugewandten vorderen Seitenwand 10 der Ausnehmung 8 zur Anlage gelangt. Gleichzeitig wird dadurch die Blockierkontur 12 in Form des vorstehenden Fingers von der Stirnfläche der Kupplungsklinke 3 weg bewegt, so dass die Kupplungsklinke 3 deblockiert wird. Das Spiel des Reibringes 4 zu der Kupplungsklinke 3 ist dabei bewusst so ausgelegt, dass der Reibring 4 ausgehend von der blockierenden Parkstellung bei stillstehender Kupplungsklinke 3 soweit bewegt werden kann, bis die Blockierung der Kupplungsklinke 3 bewusst aufgehoben ist, bevor der Reibring 4 die Ausfahrbewegung der Kupplungsklinke 3 beginnt über den Steuerarm 11 zu steuern. Nachfolgend schiebt der Reibring 4 die Kupplungsklinke 3 über den Steuerarm 11 radial nach außen aus der Ausnehmung 15 aus, bis sie mit den Zähnen 7 in die Verzahnung 20 eingreift und dadurch die Gurtspule über den Fortsatz 16 in Aufwickelrichtung antreibt, wie in der rechten oberen Darstellung der Figur 3 zu erkennen ist.

Nach erfolgter Straffbewegung wird die Straffung des Sicherheitsgurtes in dem Fall, wenn kein Unfall auftritt, wieder aufgehoben, und der Sicherheitsgurt wird bewusst wieder gelockert, indem die Antriebseinrichtung des Gurtstraffers also der Elektromotor das Antriebsrad 1 zu einer Drehbewegung um einen kleinen Drehwinkel in die entgegengesetzte Drehrichtung in Pfeilrichtung B antreibt. Diese Bewegung ist in den unteren Darstellungen zu erkennen. Das Antriebsrad 1 führt aufgrund der Drehbewegung in Pfeilrichtung B eine Relativbewegung zu dem Reibring 4 aus, oder anders ausgedrückt, der Reibring 4 führt eine Relativdrehbewegung in Pfeilrichtung D aus, bis er mit dem Steuerarm 11 seitlich an der hinteren Seitenwand 10 der Ausnehmung 8 zur Anlage gelangt, wie in der linken unteren Darstellung der Figur 3 zu erkennen ist. Nachfolgend wird die Kupplungsklinke 3 über den Steuerarm 11 aus der Verzahnung 20 herausgezogen, bis sie sich in der unteren, mittleren Darstellung der Figur 3 befindet, und die Gurtspule mit dem Fortsatz 16 frei gegenüber der Kupplungsklinke 3 drehen kann. Während der weiteren Relativdrehbewegung des Reibringes 4 zu dem Antriebsrad 1 gelangt der Steuerarm 11 zur Anlage unter die hintere Seitenfläche 10 der Ausnehmung 8, und die Blockierkontur 12 in Form des Fingers gelangt in eine Stellung, in welcher sie an der Stirnfläche der Kupplungsklinke 3 blockierend zur Anlage gelangt und diese nachfolgend während der weiteren Relativbewegung in die finale Parkposition schiebt. Die Kupplungsklinke 3 ist nachfolgend in der Parkposition an dem vorderen Ende durch den Finger des Reibringes 4 gegen ein ungewolltes Ausfahren und an dem hinteren Ende durch die unter der hinteren Seitenfläche 10 der Ausnehmung 8 anliegende Stirnseite des Steuerarmes 11 gegen eine ungewollte Auslenkung soweit blockiert, dass sie mit den Zähnen 7 nicht ungewollt in die Verzahnung 20 in Eingriff gelangen kann.

Die Beschreibung des Kupplungs- und Entkupplungsvorganges wurde in den Figuren 2 bis 4 allein anhand der Kupplungsklinke 3 vorgenommen, sie gilt aber selbstverständlich auch identisch für die gegenüberliegende, zweite Kupplungsklinke 2. Ferner wurde die Beschreibung des Bewegungsablaufes für ein einfacheres Verständnis anhand eines in einer unveränderten Stellung stehenden Antriebsrades 1 vorgenommen, und der Reibring 4 wurde stattdessen relativ gegenüber dem Antriebsrad 1 verdreht. In der Wirklichkeit wird selbstverständlich auch das Antriebsrad 1 gedreht, und der Reibring 4 wird durch die reibschlüssige, stirnseitige Anlage an dem Fortsatz 16 und an der Strafferabdeckung 17 zu der Relativbewegung gegenüber den Antriebsrad 1 gezwungen. Bei der Annahme eines stillstehenden Antriebsrades 1 entspricht diese Relativbewegung aber der dargestellten Relativbewegung des Reibringes 4 in die Pfeilrichtungen C und D.

## Patentansprüche

1. Gurtaufroller für eine Sicherheitsgurteinrichtung eines Kraftfahrzeuges mit
- einer drehbar gelagerten Gurtspule, auf welcher ein Sicherheitsgurt der Sicherheitsgurteinrichtung aufwickelbar ist, und
- einem Gurtstraffer mit einem Antriebsrad (1), welcher bei einer Aktivierung die Gurtspule in Aufwickelrichtung antreibt, und
- einer die Antriebsbewegung von dem Antriebsrad (1) auf die Gurtspule übertragenden zwangsgesteuerten Strafferkupplung, mit
- wenigstens einer an dem Antriebsrad (1) verschiebbar gelagerten Kupplungsklinke (2,3), welche zur Schaffung und Aufhebung einer Drehverbindung des Antriebsrades (1) mit der Gurtspule in Eingriff und außer Eingriff einer in Bezug zu der Gurtspule drehfesten Verzahnung (20) bewegbar ist, und
- einem Reibring (4), welcher einen Steuerarm (11) aufweist, der mit der Kupplungsklinke (2,3) gekoppelt ist, wobei
- der Reibring (4) bei einer Aktivierung des Gurtstraffers eine durch Reibkräfte erzwungene Relativbewegung zu dem Antriebsrad (1) ausführt und durch die Relativbewegung die Bewegung der Kupplungsklinke (2,3) in Eingriff und außer Eingriff der Verzahnung (20) über den Steuerarm (11) steuert,
**dadurch gekennzeichnet, dass**
- der Reibring (4) eine Blockierkontur (12) aufweist, welche derart positioniert ist, dass die Kupplungsklinke (2,3) nach der außer Eingriff Bewegung aus der Verzahnung (20) daran zur Anlage gelangt und in Richtung einer wiederholten in Eingriff Bewegung in die Verzahnung (20) blockiert ist, wobei
- die Blockierkontur (12) in Form eines von dem Reibring (4) vorstehenden Fingers gebildet ist, an dem die Kupplungsklinke (2,3) in der blockierten Stellung stirnseitig zur Anlage gelangt.

2. Gurtaufroller nach Anspruch 1, **dadurch gekennzeichnet, dass**
- die über den Steuerarm (11) zwischen dem Reibring (4) und der Kupplungsklinke (2,3) verwirklichte Kopplung spielbehaftet ist, und
- die spielbehaftete Kopplung bei einer Aktivierung des Gurtstraffers eine die Kupplungsklinke (2,3) deblockierende Relativbewegung des Reibringes (4) und/oder der Kupplungsklinke (2,3) ermöglicht.

3. Gurtaufroller nach einem der Ansprüche 1 oder 2, **dadurch gekennzeichnet, dass**
- der Reibring (4) und/oder die Kupplungsklinke (2,3) eine Steuerkontur (22) aufweisen, welche die Kupplungsklinke (2,3) während der Relativbewegung zu dem Reibring (4) in eine blockierte Stellung drängt.

4. Gurtaufroller nach Anspruch 3, **dadurch gekennzeichnet, dass**
- die Steuerkontur (22) durch eine Rampe gebildet ist.

5. Gurtaufroller nach einem der vorangegangenen Ansprüche, **dadurch gekennzeichnet, dass**
- der Reibring (4) durch ein mehrfach umgeformtes Stanzteil aus einem Metallblech gebildet ist.

6. Gurtaufroller nach einem der Ansprüche 1 bis 4, **dadurch gekennzeichnet, dass**
- der Reibring (4) durch ein Kunststoffspritzteil gebildet ist.

7. Gurtaufroller nach einem der vorangegangenen Ansprüche, **dadurch gekennzeichnet, dass**
- die Kupplungsklinke (2,3) ein Metallsinterteil ist.

## Claims

1. Belt retractor for a seat belt device of a motor vehicle, comprising
- a rotatably mounted belt reel onto which a seat belt of the seat belt device can be wound, and
- a belt tensioner having a drive wheel (1) which, when activated, drives the belt reel in a winding direction, and
- a force-controlled tensioner coupling which transmits the driving movement from the drive wheel (1) to the belt reel, having
- at least one coupling pawl (2, 3) which is slidably mounted on the drive wheel (1) and which, in order to establish and disconnect a rotational connection between the drive wheel and the belt reel (1), can be moved into and out of engagement with a toothing (20) that is rotationally fixed in relation to the belt reel, and
- a friction ring (4) which has a control arm (11) that is coupled to the coupling pawl (2, 3),
- the friction ring (4) performing, when the belt tensioner is activated, a relative movement in relation to the drive wheel (1) that is forced by frictional forces and, by the relative movement, controlling, via the control arm (11), the movement of the coupling pawl (2, 3) into engagement and out of engagement with the toothing (20),
**characterized in that**
- the friction ring (4) has a blocking contour (12), which is positioned such that the coupling pawl (2, 3) abuts said contour after the disengagement movement out of the toothing (20) and is blocked in the direction of a repeated engagement movement into the toothing (20),
- the blocking contour (12) being in the form of a finger which protrudes from the friction ring (4) and which the end of the coupling pawl (2, 3) abuts in the blocked position.

2. Belt retractor according to claim 1, **characterized in that**
- the coupling produced between the friction ring (4) and the coupling pawl (2, 3) via the control arm (11) has play, and
- the coupling with play, when the belt tensioner is activated, allows a relative movement of the friction ring (4) and/or the coupling pawl (2, 3), which movement unblocks the coupling pawl (2, 3).

3. Belt retractor according to either claim 1 or claim 2, **characterized in that**
- the friction ring (4) and/or the coupling pawl (2, 3) have a control contour (22) which pushes the coupling pawl (2, 3) into a blocked position during the relative movement in relation to the friction ring (4).

4. Belt retractor according to claim 3, **characterized in that**
- the control contour (22) is formed by a ramp.

5. Belt retractor according to any of the preceding claims, **characterized in that**
- the friction ring (4) is formed by a stamped part that has been shaped multiple times and is made of a metal sheet.

6. Belt retractor according to any of claims 1 to 4, **characterized in that**
- the friction ring (4) is formed by an injection-molded plastics part.

7. Belt retractor according to any of the preceding claims, **characterized in that**
- the coupling pawl (2, 3) is a sintered metal part.

## Revendications

1. Enrouleur de ceinture pour un dispositif de ceinture de sécurité d'un véhicule automobile comportant
- une bobine de ceinture montée rotative, sur laquelle une ceinture de sécurité du dispositif de ceinture de sécurité peut être enroulée, et
- un tendeur de ceinture comportant une roue d'entraînement (1) qui, lorsqu'il est activé, entraîne la bobine de ceinture dans le sens d'enroulement, et
- un coupleur tendeur à commande forcée transmettant le mouvement d'entraînement de la roue d'entraînement (1) sur la bobine de ceinture, comportant
- au moins un cliquet d'accouplement (2, 3) monté de manière mobile sur la roue d'entraînement (1) et qui peut être déplacé en prise et hors de prise avec une denture (20), laquelle est fixe par rapport à la bobine de ceinture, afin de créer et d'annuler une liaison en rotation entre la roue d'entraînement (1) et la bobine de ceinture, et
- un anneau de friction (4) qui présente un bras de commande (11) couplé au cliquet d'accouplement (2, 3),
- lorsque le tendeur de ceinture est activé, l'anneau de friction (4) exécutant un mouvement relatif sur la roue d'entraînement (1) qui est forcé par les forces de friction et, par le mouvement relatif, commandant le mouvement du cliquet d'accouplement (2, 3) en prise et hors de prise avec la denture (20) par l'intermédiaire du bras de commande (11),
**caractérisé en ce que**
- l'anneau de friction (4) présente un contour de blocage (12) positionné de telle sorte que le cliquet d'accouplement (2, 3) vient en appui sur celui-ci après le mouvement hors de prise avec la denture (20) et est bloqué en direction d'un mouvement de mise en prise répété dans la denture (20), dans lequel
- le contour de blocage (12) est réalisé sous la forme d'un doigt faisant saillie de l'anneau de friction (4) et sur lequel le cliquet d'accouplement (2, 3) vient en appui côté face en position bloquée.

2. Enrouleur de ceinture selon la revendication 1, **caractérisé en ce que**
- l'accouplement réalisé par l'intermédiaire du bras de commande (11) entre l'anneau de friction (4) et le cliquet d'accouplement (2, 3) est pourvu d'un jeu, et
- l'accouplement pourvu d'un jeu permet un mouvement relatif de l'anneau de friction (4) et/ou du cliquet d'accouplement (2, 3) qui débloque le cliquet d'accouplement (2, 3) lorsque le tendeur de ceinture est activé.

3. Enrouleur de ceinture selon l'une des revendications 1 ou 2, **caractérisé en ce que**
- l'anneau de friction (4) et/ou le cliquet d'accouplement (2, 3) présentent un contour de commande (22) qui sollicite le cliquet d'accouplement (2, 3) dans une position bloquée pendant le mouvement relatif par rapport à l'anneau de friction (4).

4. Enrouleur de ceinture selon la revendication 3, **caractérisé en ce que**
- le contour de commande (22) est formé par une rampe.

5. Enrouleur de ceinture selon l'une des revendications précédentes, **caractérisé en ce que**
- l'anneau de friction (4) est formé par une pièce emboutie en tôle métallique qui a été formée plusieurs fois.

6. Enrouleur de ceinture selon l'une des revendications 1 à 4, **caractérisé en ce que**
- l'anneau de friction (4) est formé par une pièce en plastique moulée par injection.

7. Enrouleur de ceinture selon l'une des revendications précédentes, **caractérisé en ce que**
- le cliquet d'accouplement (2, 3) est une pièce métallique frittée.
